# EUROPEAN PATENT SPECIFICATION

(11) **EP 2 909 771 B1**
(45) Date of publication and mention of the grant of the patent: **11.12.2024**
(21) Application number: 13847782.3
(22) Date of filing: 23.09.2013
(51) Int. Cl.: G06F 21/73, G06Q 30/06, G06F 21/10

(54) **SYSTEM AND METHOD FOR MANAGING ENTITLEMENT OF DIGITAL ASSETS**
SYSTEM UND VERFAHREN ZUR VERWALTUNG DER BERECHTIGUNG FÜR DIGITALE RESSOURCEN
SYSTÈME ET PROCÉDÉ DE GESTION DE DROIT D'ACTIFS NUMÉRIQUES

(30) Priority: 17.10.2012 US 201213653604
(43) Date of publication of application: 26.08.2015
(73) Proprietor: Dell Products L.P., Round Rock, TX 78682-2244 (US)
(72) Inventor: O'CONNOR, Clint H., Austin, Texas 78754-5958 (US); HUBER, Gary, Austin, Texas 78726 (US)
(74) Representative: Bardehle Pagenberg Partnerschaft mbB Patentanwälte Rechtsanwälte
(86) International application number: PCT/US2013/061169
(87) International publication number: WO 2014/062349

(56) References cited:
- EP-A2- 1 923 814
- US-A1- 2009 187 491
- US-A1- 2010 295 796
- US-A1- 2011 231 281
- US-A1- 2011 231 281
- US-A1- 2012 159 611
- US-B2- 7 483 860

## Description

### TECHNICAL FIELD

The present disclosure relates to the management of information handling systems. More specifically, embodiments of the disclosure provide a system, method, and article of manufacture for migrating entitled digital assets from a source system to a target system.

### BACKGROUND

As the value and use of information continues to increase, individuals and businesses seek additional ways to process and store information. One option available to users is information handling systems. An information handling system generally processes, compiles, stores, and/or communicates information or data for business, personal, or other purposes thereby allowing users to take advantage of the value of the information. Because technology and information handling needs and requirements vary between different users or applications, information handling systems may also vary regarding what information is handled, how the information is handled, how much information is processed, stored, or communicated, and how quickly and efficiently the information may be processed, stored, or communicated. The variations in information handling systems allow for information handling systems to be general or configured for a specific user or specific use such as financial transaction processing, airline reservations, enterprise data storage, or global communications. In addition, information handling systems may include a variety of hardware and software components that may be configured to process, store, and communicate information and may include one or more computer systems, data storage systems, and networking systems.

Current approaches to acquiring digital assets on-line, whether in physical or digital form, typically involve the purchaser placing an order with an on-line retailer and then concluding the purchase with a payment transaction. If the digital assets are in physical form, they are then shipped to the purchaser. If in digital form, the purchaser typically conducts a download session, which may include a unique license key. Known approaches to managing the licensing of downloaded digital assets include establishing a license for a digital asset and a corresponding download link such that it can be sent to a particular information handling system. The license is then associated with the target system and tracked over time for termination, renewal, or possible transfer to another system.

However, the digital assets may be acquired from multiple on-line sources, including a closed enterprise networking environment, catalog vendors stocking a wide variety of digital assets, or individual software producers. As a result, the purchaser must keep track of the source for each individual digital asset and its associated license.

Furthermore, it is not uncommon for users to misplace or forget their user IDs and passwords. While methods exist to recover a log-in name and password, the process is inherently cumbersome and may create delays in installing the digital assets on the user's system. In view of the foregoing, there is a need for allowing a broad range of digital assets to be delivered digitally, through multiple channels, to multiple information handling systems, through individual or multiple accounts, and to accommodate various licensing restrictions.

In addition, in enterprise computing environments in which numerous digital asset entitlements are associated with numerous individual users or computing systems, management and tracking of the various digital assets in the enterprise may be difficult. Such may be the case when "ad hoc" acquisitions of digital assets are made within an enterprise.

EP 1 923 814 A2 discloses a method of distributing electronic content. The method comprises distributing a first electronic object to a user's computer system, the first electronic object being associated with an encrypted piece of electronic content, the first electronic object comprising first control information governing use of the piece of electronic content, the first control information specifying one or more permitted uses of the piece of electronic content, and separately distributing a second electronic object to the user's computer system, the second electronic object comprising second control information governing use of the piece of electronic content. The first and second control information are configured to be applied in combination by tamper resistant hardware and/or software running on the user's computer system to securely govern use of the piece of electronic content. A corresponding method of receiving electronic content is also disclosed.

US 2011/0231281 A1 discloses a system, method, and computer-readable medium for separating the purchase of digital assets from their fulfillment and activation. Digital assets purchase information comprising digital assets identifier information and activation key data, and system identifier information comprising system identifier data, is received. The purchase information and the system identifier information are processed to generate digital assets activation request data, which is then processed by the provider of the digital assets to generate digital assets activation data. Associated digital assets data is provided with the digital assets activation data and then processed with the purchase transaction data to generate digital assets entitlement data. A personalization agent associated with a target system automatically downloads the purchased digital assets and associated digital assets entitlement data, which is used to install the digital assets, thereby entitling the system to process the installed digital assets.

### SUMMARY

In accordance with the teachings of the present disclosure, the disadvantages and problems associated with entitling digital assets have been substantially reduced or eliminated.

In accordance with embodiments of the present disclosure, an information handling system for managing the entitlement of digital assets may include a storage medium and a processor. The storage medium may include entitlement data associated with one or more digital assets. The processor may be configured to receive a plurality of entitlements for a digital asset from a parent device. The processor may also be configured to bind the digital asset and the plurality of entitlements to the information handling system. The processor may additionally be configured to allocate the plurality of entitlements among a plurality of child devices. The processor may be further be configured to bind the plurality of entitlements to the plurality of child devices in accordance with the entitlements.

In accordance with these and other embodiments, a computer-implemented method for managing the entitlement of digital assets may include receiving at an information handling system a plurality of entitlements for a digital asset from a parent device. The method may also include binding the digital asset and the plurality of entitlements to the information handling system. The method may additionally include allocating the plurality of entitlements among a plurality of child devices. The method may further include binding the plurality of entitlements to the plurality of child devices in accordance with the entitlements.

In accordance with these and other embodiments, an article of manufacture may include a computer readable medium and computer-executable instructions carried on the computer readable medium. The instructions may be readable by a processor, the instructions, when read and executed, for causing the processor to: (i) receive at an information handling system a plurality of entitlements for a digital asset from a parent device; (ii) bind the digital asset and the plurality of entitlements to the information handling system; (iii) allocate the plurality of entitlements among a plurality of child devices; and (iv) bind the plurality of entitlements to the plurality of child devices in accordance with the entitlements.

Technical advantages of the present disclosure may be apparent to those of ordinary skill in the art in view of the following specification, claims, and drawings.

### BRIEF DESCRIPTION OF THE DRAWINGS

A more complete understanding of the present embodiments and advantages thereof may be acquired by referring to the following description taken in conjunction with the accompanying drawings, in which like reference numbers indicate like features, and wherein:
FIGURE 1 illustrates a block diagram of an example information handling system, in accordance with embodiments of the present disclosure;
FIGURE 2 illustrates a block diagram of an example digital assets entitlement system in accordance with components of the present disclosure;
FIGURES 3A-B illustrate block diagrams of an example unique system identifier that remains the same when one of its associated system component identifiers has been changed, in accordance with embodiments of the present disclosure;
FIGURES 4A-B illustrate block diagrams of an example unique system identifier that is changed when one of its associated system component identifiers has been changed, in accordance with embodiments of the present disclosure;
FIGURE 5 illustrates a block diagram of an example encrypted unique system identifier generated from a set of system component identifiers, in accordance with embodiments of the present disclosure;
FIGURE 6 illustrates a block diagram of an example unique system identifier decrypted from an encrypted unique system identifier, in accordance with embodiments of the present disclosure;
FIGURES 7A-B illustrate a flow chart of an example method for performance of digital asset entitlement operations, in accordance with embodiments of the present disclosure;
FIGURE 8 illustrates a block diagram of an example hierarchical system for management of digital assets entitlement, in accordance with embodiments of the present disclosure; and
FIGURE 9 illustrates a flow chart of an example method for performance of digital assets entitlement in a hierarchical system for management of digital assets entitlement, in accordance with embodiments of the present disclosure.

### DETAILED DESCRIPTION

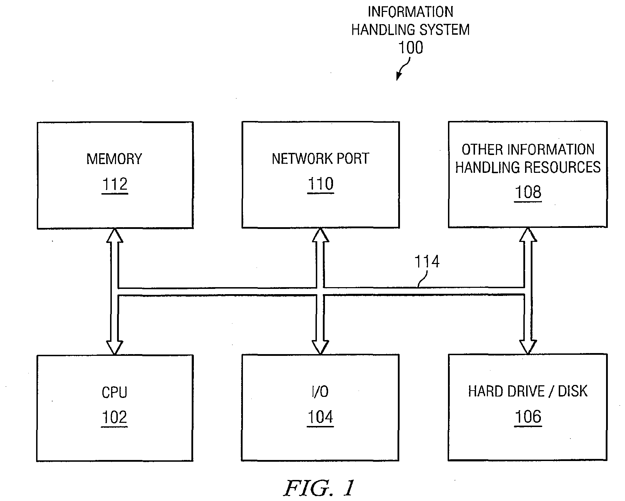

Preferred embodiments and their advantages are best understood by reference to FIGURES 1-9, wherein like numbers are used to indicate like and corresponding parts.

For the purposes of this disclosure, an information handling system may include any instrumentality or aggregate of instrumentalities operable to compute, classify, process, transmit, receive, retrieve, originate, switch, store, display, manifest, detect, record, reproduce, handle, or utilize any form of information, intelligence, or data for business, scientific, control, entertainment, or other purposes. For example, an information handling system may be a personal computer, a personal digital assistant (PDA), a consumer electronic device, a network storage device, or any other suitable device and may vary in size, shape, performance, functionality, and price. The information handling system may include memory, one or more processing resources such as a central processing unit (CPU) or hardware or software control logic. Additional components of the information handling system may include one or more storage devices, one or more communications ports for communicating with external devices as well as various input and output (I/O) devices, such as a keyboard, a mouse, and a video display. The information handling system may also include one or more buses operable to transmit communication between the various hardware components.

FIGURE 1 illustrates a block diagram of an example information handling system 100, in accordance with embodiments of the present disclosure. Information handling system 100 may include a processor 102, I/O devices 104, a hard drive or disk storage 106, a network port 110, a memory 112, various other information handling resources 108, all communicatively coupled to each other via one or more buses 114. In some embodiments an information handling system identification similar to that depicted in FIGURE 1 may be used to implement one or more methods and/or systems disclosed herein.

A processor 102 may include any system, device, or apparatus configured to interpret and/or execute program instructions and/or process data, and may include, without limitation a microprocessor, microcontroller, digital signal processor (DSP), application specific integrated circuit (ASIC), or any other digital or analog circuitry configured to interpret and/or execute program instructions and/or process data. In some embodiments, processor 102 may interpret and/or execute program instructions and/or process data stored in memory 112, hard drive 106, and/or another component of system 100.

An I/O device 104 may include any system, device, or apparatus from which processor 102 may receive input or to which processor 102 may deliver output. An I/O device may include a display, a keyboard, a mouse, other I/O devices, and/or associated controllers.

Hard drive 106 may include computer-readable media (e.g., magnetic storage media, optical storage media, opto-magnetic storage media, and/or other type of rotating storage media, flash memory, and/or other type of solid state storage media) and may be generally operable to store data and/or programs (e.g., one or more operating systems and/or one or more application programs). Although FIGURE 1 depicts information handling system 100 as including one hard drive 106, information handling system 100 may include any suitable number of hard drives 106.

Network port 110 may include any suitable system, apparatus, or device operable to serve as an interface between information handling system 100 and a network. Network port 110 may enable information handling system 102 to communicate over such network using any suitable transmission protocol and/or standard, including without limitation Fibre Channel, Frame Relay, Asynchronous Transfer Mode (ATM), Internet Protocol (IP), other packet-based protocol, small computer system interface (SCSI), Internet SCSI (iSCSI), Serial Attached SCSI (SAS) or any other transport that operates with the SCSI protocol, advanced technology attachment (ATA), serial ATA (SATA), advanced technology attachment packet interface (ATAPI), serial storage architecture (SSA), integrated drive electronics (IDE), and/or any combination thereof.

Memory 112 may be communicatively coupled to processor 102 and may include any system, device, or apparatus configured to retain program instructions and/or data for a period of time (e.g., computer-readable media). Memory 112 may include random access memory (RAM), electrically erasable programmable read-only memory (EEPROM), a Personal Computer Memory Card International Association (PCMCIA) card, flash memory, magnetic storage, opto-magnetic storage, or any suitable selection and/or array of volatile or nonvolatile memory that retains data after power to information handling system 100 is turned off. Although FIGURE 1 depicts information handling system 100 as including one memory 112, information handling system 100 may include any suitable number of memories 112.

Other information handling resources 108 may include any component systems, devices, or apparatuses of an information handling system 100, including without limitation processors, buses, memories, I/O devices and/or interfaces, storage resources, network interfaces, motherboards, electro-mechanical devices (e.g., fans), displays, and power supplies.

The one or more buses 114 may comprise any suitable collection of systems, devices, or apparatuses configured to transfer data between various components of information handling system 100. For example, one or more buses 114 may include a serial advanced technology attachment (SATA) bus, a Peripheral Component Interconnect (PCI)/PCMCIA bus, Universal Serial Bus (USB), an SCSI bus, FireWire (IEEE 1394) bus, InfiniBand bus, any other suitable bus, or any combination of the foregoing.

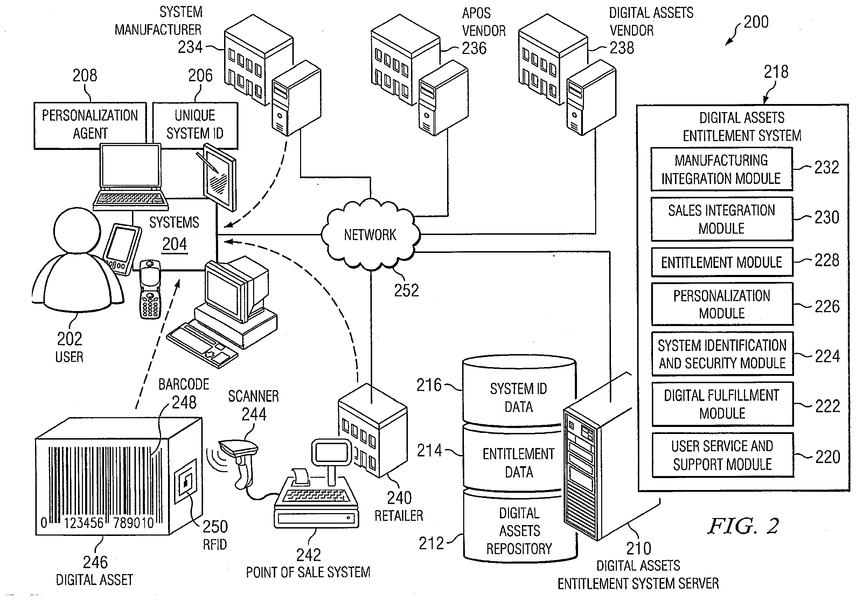

FIGURE 2 illustrates a block diagram of an example digital assets entitlement system 218, in accordance with embodiments of the present disclosure. In some embodiments, digital assets entitlement system 218 may be implemented for managing the entitlement of a system 204 to process a digital asset 246. In these and other embodiments, digital assets entitlement system 218 may be implemented on one or more servers 210, which may be commercially coupled to a network 252. In various embodiments, network 252 may comprise a public network, for example the Internet, a physical private network, a virtual private network (VPN), or any combination thereof. As shown in FIGURE 2, digital assets entitlement system 218 may include a user service and support module 220, a digital fulfillment module 222, and a system identification and security module 224. Digital assets entitlement system 218 may likewise comprise a personalization module 226, an entitlement module 228, a sales integration module 230, and a manufacturing integration module 232. In addition, digital assets entitlement system 218 may be configured to access a digital assets data repository 212, an entitlement data repository 214, and a system identifier (ID) data repository 216, each of which may be implemented on one or more servers 210 communicatively coupled to a network 252.

As used herein, a digital asset 246 refers to any digital asset, for example, a software application, a deliverable or performable service, music, video, software activation key, personalization instructions, files, etc. that are digitally deliverable either wholly or partially. As likewise used herein, a digital assets entitlement may refer to the association of a predetermined digital asset 246 with a target system 204. In various embodiments, an entitlement record may include the digital assets entitlement data (e.g., license information, etc.) that allows digital asset 246 to be processed by a target system 204 identified by a corresponding unique system identifier 206. In these and other embodiments, the entitlement record may be processed by entitlement module 228 and stored in entitlement data repository 214. Likewise, as used herein, a system 204 may comprise an information handling system (e.g., a personal computer, a laptop computer, a tablet computer, a PDA, a mobile telephone, or any other suitable device) operable to store a unique system ID 206, perform digital asset entitlement operations with a personalization agent, and operable to establish an online session with digital assets entitlement system 218 via network 252.

In some embodiments, digital assets entitlement and system personalization operations may be performed by a user 202, in either a physical environment or an online environment. A user 202 may comprise a system purchaser enterprise administrator, information technologist, or another suitable person. As an example, a physical environment may comprise a retailer 240 operating a physical point-of-sale (POS) system 242. As another example, an online environment may comprise a system manufacturer 234, after-point-of-sale (APOS) vendor 236, or digital assets vendor 238, that respectively accepts online orders for systems or digital assets via network 252.

If the digital assets entitlement and system personalization operations are performed in an online environment, then user 202 may decide whether to purchase a custom-configured or pre-configured system 204. If the system 204 is to be pre-configured, then it may be selected for online purchase by the user 202 and its unique identifier 206 may be determined. In some embodiments, the unique system identifier 206 may be stored in the basic input/output system (BIOS) of the pre-configured system 204. However, if the system 204 is to be custom-configured, then it may be custom-configured for online purchase by user 202. Once manufactured by system manufacturer 234, a unique system identifier may be generated as described in greater detail herein.

In various embodiments, manufacturing integration module 232 may coordinate the custom configuration of the system 204 with digital assets entitlement system 218. Likewise, system identification and security module 224 may coordinate the generation of unique system identifier 204 and its storage in the repository of system identifier data 216. User 202 may then select a digital asset 246 for online purchase, followed by selecting personalization options for the pre-configured or custom-configured system 209. In various embodiments, the personalization module 226 coordinates the selection of personalization options with digital assets entitlement system 218. As used herein, a system personalization option refers to any feature, capability, or function that may be applied to a target system 204. As an example, a personal computer desktop wallpaper or user interface options (e.g., a "classic" interface) are personalization options.

However, if the digital assets entitlement and system personalization operations are performed in a physical environment, then user 202 may select a pre-configured system 204 and physical representations of digital assets 246 to be purchased. In various embodiments, the digital asset 246 may be physically represented as images and/or text on a card or a package, yet the digital assets themselves may not be included within the card or package. User 202 may then select system personalization options for the pre-configured system 204. In various embodiments, the system personalization options may likewise be physically represented as images and/or text on a card or a package.

The digital assets product identifier (ID) may then be scanned with a scanner 244 from its corresponding physical representation, followed by scanning its corresponding digital assets activation key or other entitlement data. In various embodiments, it is not necessary to scan the digital assets activation key or other entitlement data as it is provided by digital assets entitlement system 218 during digital asset entitlement operations described in greater detail herein. Data related to the previously selected personalization options may then likewise be scanned, followed by determining unique system identifier 206 of pre-configured system 204. In various embodiments, the digital assets product ID, its associated activation key or entitlement data, the personalization option data, and the unique system identifier may be represented by a bar code 248 or other indicia on a card or physical package. In various other embodiments, the digital assets product ID, its associated activation key or entitlement data, the personalization option data, and the unique system identifier may be stored in a radio frequency identifier (RFID) 250 tag affixed to the physical representation of the digital asset. Those of skill in the art may appreciate that many such embodiments are possible and that the foregoing is not intended to limit the scope, or intent of the disclosure.

A purchase transaction for the custom-configured or pre-configured system 204 and any associated digital assets 246 and personalization options may then be completed. In various embodiments, the processing of the purchase transaction may be performed by the sales integration module 230. In these and other embodiments, the financial proceeds of the purchase transaction may be settled between multiple parties. For example, a system manufacturer 234 may receive a portion of the purchase transaction corresponding to the cost of the system 204. One or more digital assets vendors 238 may likewise receive a proportionate share of the purchase transaction corresponding to the digital asset 246 they respectively provide.

Digital asset entitlement operations, as described in greater detail herein, may then be performed by digital assets entitlement system 218 to bind the digital assets 246, the personalization options, and their respective digital assets entitlement data to unique system identifier 206 of target system 204. The resulting bound data, including data associated with the digital assets (e.g., installation files, etc.) may then be stored in the repository of entitlement data 214 and purchased system 204 may then be delivered to user 202 or another person designated by user 202. In various embodiments, entitlement module 228 may generate, and then process, the digital assets entitlement data and user service and support module 220 may coordinate the delivery of system 204 to user 202 or another person designated by user 202.

Standard operating system (OS) out-of-the-box-experience (OOBE) or hypervisor boot operations may be performed on the system 204, followed by loading a personalization agent 208. In various embodiments, the personalization agent 208 has a unique identifier that may be associated with one or more unique system component identifiers. In some embodiments, the unique identifier of the personalization agent may be uniquely associated with the current unique system identifier 206 associated with the system 204. In other embodiments, a portion of the personalization agent 208 may be delivered to the system 204 in an encrypted form and may then be decrypted prior to being loaded on the system 204. In these embodiments, the primary system identifier (e.g., service tag number, serial number, etc.), may be used as a decryption key to decrypt the personalization agent 208.

In these and other embodiments, secondary system identifiers may be stored on system 204 (e.g., in the BIOS, in flash memory, on a hard disk, etc.) as well as in digital assets entitlement system 218. In these and other embodiments, digital assets entitlement system 218 may use the secondary system identifiers to encrypt a portion of personalization agent 208 before it is downloaded to system 204. Once downloaded, the unencrypted portion of personalization agent 208 may use the secondary system identifiers stored on system 204 to decrypt the encrypted portion of personalization agent 208. In some embodiments, the secondary system identifiers may likewise be encrypted and may first be decrypted before they are used to decrypt the encrypted portion of personalization agent 208. In other embodiments, the secondary system identifiers may be stored in a Trusted Platform Module (TPM). Skilled practitioners of the art may appreciate that many such embodiments are possible and the foregoing is not intended to limit the scope, or intent of the disclosure.

Personalization agent 208 may query target system 204 for its unique system identifier 206. In various embodiments, unique system identifier 206 associated with system 204 may be stored in the target system's BIOS, flash memory, a hard disk, and/or other memory device. Personalization agent 208 may then automatically establish a communication session with digital assets entitlement system 218 and use unique system identifier 206 to authenticate system 204. Unique system identifier 206 may then be used by the personalization agent 208 to determine entitled digital assets and personalization options corresponding to the unique system identifier 206.

Once determined, the corresponding personalization options and digital assets 246, along with their associated digital assets entitlement data, may be respectively downloaded to target system 204 from the repository of digital assets 212 and the repository of entitlement data 214. In some embodiments, the personalization options and digital assets 246, along with their associated digital assets entitlement data 214, may be downloaded from a single server 210 on network 252. In other embodiments, the personalization options and digital assets 246 may be downloaded from one or more servers 210 on network 252. In yet other embodiments, the personalization options, digital assets 246, and associated digital assets entitlement data 214 may be respectively downloaded from a plurality of servers 210 on network 252. As an example, a first digital asset 246 may be provided by system manufacturer 234 and a second digital asset 246 may be provided by a digital assets vendor 238. Likewise, a plurality of digital assets 246 may be provided by a corresponding plurality of digital assets vendors 238. Skilled practitioners of the art may appreciate that many such embodiments and examples are possible and the foregoing is not intended to limit the scope, or intent of the disclosure.

In various embodiments, digital assets entitlement system 218 may manage the respective location of the personalization options, digital assets 246, and associated digital assets entitlement data 214 to initiate its provision. Once downloaded, personalization agent 208 may use digital assets entitlement data 214 to install digital assets 246 and personalization options on system 204. Thereafter, user 202 or another person may decide to perform an APOS purchase of digital asset 246. As used herein, an APOS purchase of digital assets may refer to any purchase of digital asset 246 made after the initial online or physical purchase of system 204. In various embodiments, the APOS purchase of a digital asset 246 may be performed in a physical, online, or enterprise point-of-sale environment. If the APOS purchase is performed in an online environment, for example from APOS vendor 236, then user 202 or another person may select a digital asset 246 for online purchase. Personalization agent 208 may then determine unique system identifier 206 of system 204. An APOS purchase transaction may then be performed for purchase of the selected digital asset 246. However, if the APOS purchase is performed in a physical environment, then the user 202 or another person may select a physical representation of a digital asset 246 to be purchased. The digital assets product ID may then be scanned from its corresponding physical representation, followed by scanning its corresponding digital assets activation key or other entitlement data.

Digital asset entitlement operations, as described in greater detail herein, may then be performed by digital assets entitlement system 218 to bind digital assets 246 and their respective digital assets entitlement data 214 associated with the APOS purchase to unique system identifier 206 of target system 204. The resulting bound data, including data associated with the digital assets (e.g., installation files, etc.) may then be stored, as described in greater detail herein, in digital assets entitlement system 218. Personalization agent 208, as likewise described in greater detail herein, then automatically establishes a communicative session with digital assets entitlement system 218, and may download the purchased digital assets 246 and their associated digital assets entitlement data 214. Once downloaded, personalization agent 208 may then use the associated digital assets entitlement data 214 to install the downloaded digital asset 246 on system 204.

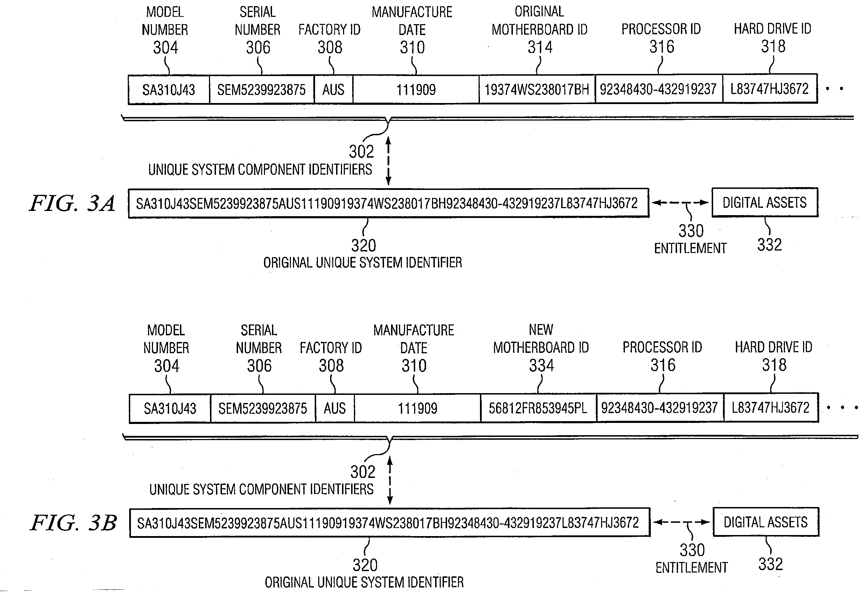

FIGURES 3A-B illustrate a block diagram of an example unique system identifier 320 that remains the same when one of its associated system component identifiers has been changed; in accordance with embodiments of the present disclosure. As shown in FIGURE 3A, an original unique system identifier 320 may be generated from a plurality of unique system component identifiers 302, which correspond to a plurality of system components included in a target system 204. As likewise shown in FIGURE 3A, unique system component identifiers 302 may comprise a Model Number 304 'SA310J43', a Serial Number 306, sometimes referred to as a service tag number or a primary system identifier, 'SEM5239923875', a Factory ID 308 'AUS', and a Manufacture Date 310 '111909'. Unique system component identifiers 302 may likewise comprise an Original Motherboard ID 314 '19374WS238017BH', a Processor ID 316 '92348430-432919237', a Hard Drive ID 318 'L83747HJ3672', etc.

As described in greater detail herein, once generated, original unique system identifier 320 may be associated, such as, for example, through a binding operation, with predetermined digital assets 332 to generate a digital assets entitlement 330. As likewise described in greater detail herein, digital assets entitlement 330 entitle a target system 204, which may be associated with the original unique system identifier 320, to process the digital assets 332. However, it is not uncommon for system components to be replaced due to failure, erratic performance, becoming outmoded, or for other reasons. It will be appreciated that the entitlement 330 between original unique system identifier 320 and digital assets 332 may be compromised as a result of such a replacement. For example, as illustrated in FIGURE 3B, the Original Motherboard ID 314 '19374WS238017BH' may be replaced with a New Motherboard ID 334 '56812FR853945PL'. However, in such case the original unique system identifier 320 may remain unchanged.

In various embodiments, extract, transform, and load (ETL) and other database operations may be performed to manage the integrity of the relationship between original unique system identifier 320 and the plurality of unique system component identifiers 302. As an example, Original Motherboard ID 314 '19374WS238017BH' may remain as a subset of original unique system identifier 320, even though it may have been deactivated or invalidated as a unique system component identifier 302. However, in these and other embodiments, relational database operations known to those of skill in the art may be applied to maintain the relationship between original unique system identifier 320, New Original Motherboard ID 334 '56812FR853945PL', and unchanged unique system component identifiers 302. Accordingly, the integrity of entitlement 330 between original unique system identifier 320 and digital assets 332 may be perpetuated. It may be appreciated by skilled practitioners of the art that many such embodiments are possible and the foregoing is not intended to limit the scope, or intent of the disclosure.

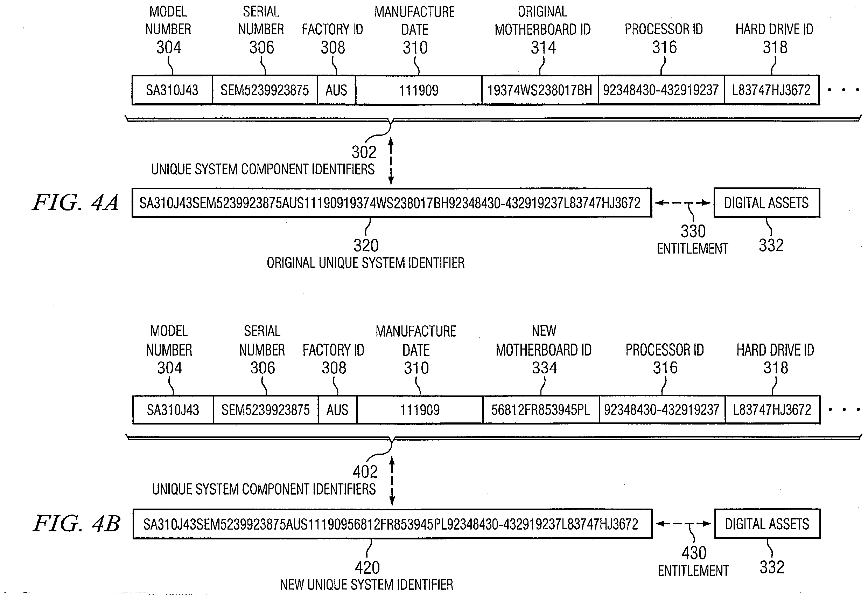

FIGURES 4A-B illustrate a block diagram of an example unique system identifier 320 that is changed when one of its associated system component identifiers has been changed, in accordance with embodiments of the present disclosure. As shown in FIGURE 4A, an original unique system identifier 320 may be generated from a plurality of unique system component identifiers 302, which correspond to a plurality of system components included in a target system 204. As likewise shown in FIGURE 3A, unique system component identifiers 302 may comprise Model Number 304 'SA310J43', Serial Number 306, sometimes referred to as a service tag number or a primary system identifier, 'SEM5239923875', Factory ID 308 'AUS', and Manufacture Date 310 '111909'. Unique system component identifiers 302 may likewise comprise Original Motherboard ID 314 '19374WS238017BH', Processor ID 316 '92348430-432919237', Hard Drive ID 318 183747HJ3672', etc.

As described in greater detail herein, once generated, original unique system identifier 320 may be associated, such as, for example, through a binding operation, with predetermined digital assets 332 to generate a digital assets entitlement 330. As likewise described in greater detail herein, digital assets entitlement 330 entitles a target system 204, which may be associated with original unique system identifier 320, to process digital assets 332. However, it is not uncommon for system components to be replaced due to failure, erratic performance, becoming outmoded, or for other reasons. It will be appreciated that entitlement 330 between the original unique system identifier 320 and digital assets 332 may be compromised as a result of such a replacement. For example, as illustrated in FIGURE 4B, Original Motherboard ID 314 '19374WS238017BH' may be replaced with New Motherboard ID 334 '56812FR853945PL'. As result, a new unique system identifier 420 may be generated, which may be a concatenation of the plurality of unique system component identifiers 402, including New Original Motherboard ID 334 '56812FR853945PL' as a subset.

In various embodiments, a first set of operations may be performed to remove entitlement 330 between original unique system identifier 320 and digital assets 332. A second set of operations may then be performed to associate new unique system identifier 420 with digital assets 332 to generate a new entitlement 430. In these and other embodiments, original unique system identifier 320 may then be invalidated. Accordingly, the integrity of original entitlement 330 between original unique system identifier 320 and digital assets 332 may be perpetuated by new entitlement 430 between new unique system identifier 420 and digital assets 332. Skilled practitioners of the art may appreciate that many such embodiments are possible and the foregoing is not intended to limit the scope, or intent of the disclosure.

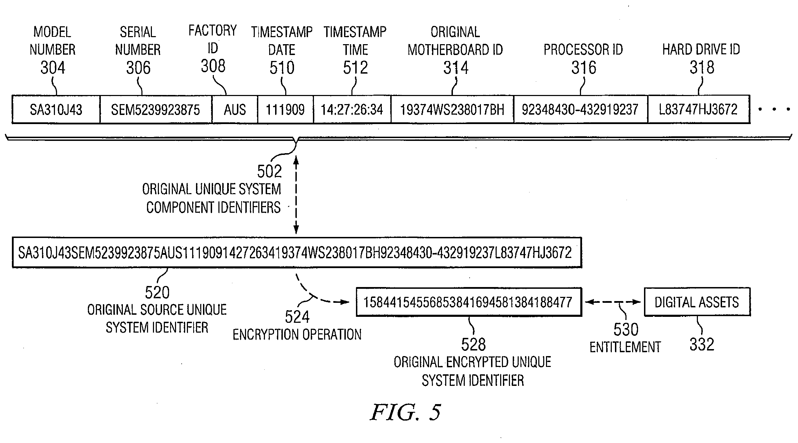

FIGURE 5 illustrates a block diagram of an example encrypted unique system identifier 528 generated from a set of system component identifiers, in accordance with embodiments of the present disclosure. In these embodiments, a source unique system identifier 520 may be generated from a plurality of original unique system component identifiers 502, which may correspond to a plurality of system components included in a target system 204. As shown in FIGURE 5, original unique system component identifiers 502 may comprise Model Number 304 'SA310J43', Serial Number 306, sometimes referred to as a service tag number or a primary system identifier, 'SEM5239923875', Factory ID 308 'AUS', Timestamp Date 510 '111909', and Timestamp Time 512 '14:27:26:34'. Original unique system component identifiers 502 may likewise comprise Original Motherboard ID 314 '19374WS238017BH', Processor ID 316 '92348430-432919237', Hard Drive ID 318 183747HJ3672', etc.

An encryption operation 524 may then be performed on source unique system identifier 520 to generate original encrypted unique system identifier 528. In various embodiments, the encryption operation may comprise the use of a private key, a public key, key pairs, or any combination of keys and cryptographic operations such as implemented in a public key infrastructure (PKI), for example. As an example, the original encrypted unique system identifier 528 may be generated using a private key associated with the manufacturer of the system and a public key associated with the system itself. In some embodiments, the Timestamp Date 510 '111909' and the Timestamp Time 512 '14:27:26:34' may likewise be used to generate the encrypted unique system identifier 528. Skilled practitioners of the art may be familiar with such cryptographic operations and may appreciate that many such embodiments are possible and that the foregoing is not intended to limit the scope, or intent of the disclosure.

As described in greater detail herein, once generated, original encrypted unique system identifier 528 may be associated, such as, for example, through a binding operation, with predetermined digital assets 332 to generate a digital assets entitlement 530. As likewise described in greater detail herein, digital assets entitlement 530 may entitle a target system 204, which may be associated with original encrypted unique system identifier 528, to process digital assets 332.

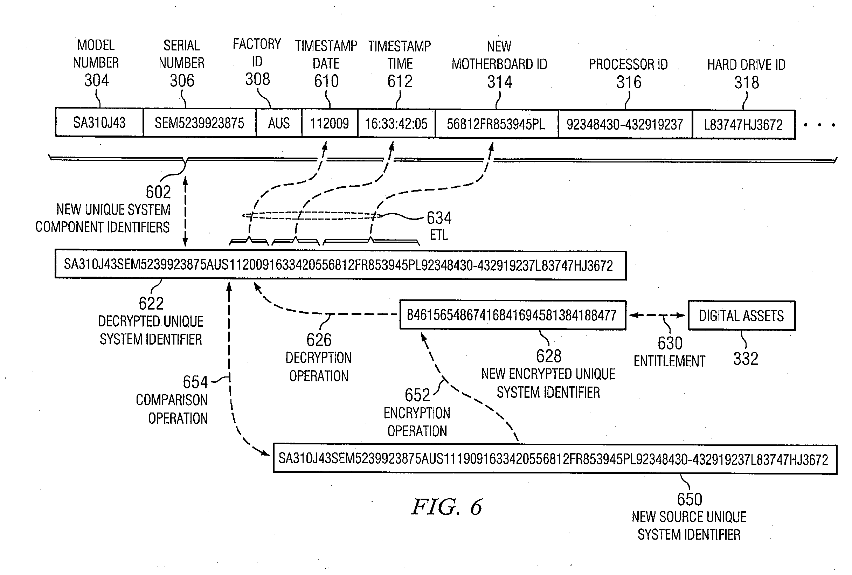

FIGURE 6 illustrates a block diagram of an example unique system identifier decrypted from an encrypted unique system identifier 622, in accordance with embodiments of the present disclosure. It is not uncommon for system components to be replaced due to failure, erratic performance, becoming outmoded, or for other reasons. However, the replaced system component will typically have a different unique system component identifier. As a result, the entitlement association between a unique system identifier and predetermined digital assets may be compromised as a result of such a replacement, which in turn may prevent target system 204 from processing the digital assets 246.

In various embodiments, the unique system component identifier of the replacement system component may be unknown until it is replaced in the target system 204. In these and other embodiments, the system component may be replaced in the target system 204, the target system may then be initiated (e.g., booted), and an inventory of unique system component identifiers may be performed. In some embodiments, one or more unique system component identifiers, for example a serial number or service tag, may be visible and may be visually inventoried. In other embodiments, one or more unique system component identifiers, for example a motherboard, processor, or hard drive serial number, may not be visible and may be automatically inventoried.

As shown in FIGURE 6, a new source unique system identifier 650 may be generated from the inventoried unique system component identifiers. In some embodiments, a time stamp date and a time stamp time may be components of new source unique system identifier 650. In these embodiments, the time stamp date and a time stamp time may be used to validate the authenticity of new source unique system identifier 650. As an example, the provider of the replacement part may have stipulated that the replacement part be replaced on Nov. 12, 2009, between 8:00 AM and 6:00 PM. Accordingly, a time stamp date of Nov. 12, 2009 and a time stamp time of 16:33:42:05 may provide validation that the replacement part was replaced within the specified date and time interval.

An encryption operation 652 may then be performed on new source unique system identifier 650 to generate a new encrypted unique system identifier 628. As an example, the encryption operation may be performed using a private key associated with the target system and a public key associated with the provider of the replacement system component. The new encrypted unique system identifier 628 may then be communicated to digital assets entitlement system 218, which may in turn perform a decryption operation 626 to generate a decrypted unique system identifier 622.

As likewise shown in FIGURE 6, ETL and other database operations 634 may be performed on the decrypted unique system identifier 622 to generate new unique system component identifiers 602. As shown in FIGURE 6, the new unique system component identifiers may now comprise Model Number 304 'SA310J43, Serial Number 306, 'SEM5239923875', Factory ID 308 'AUS', Timestamp Date 610 '112009', and Timestamp Time 612 '16:33:42:05'. New unique system component identifiers 602 may likewise comprise New Motherboard ID 314 '56812FR853945PL', Processor ID 316 '92348430-432919237', Hard Drive ID 318 'L83747HJ3672', etc. In some embodiments, Timestamp Date 610 and Timestamp Time 612 may be compared to previously authorized timestamp date and timestamp times to validate the authenticity of new unique system component identifiers 602 and their corresponding decrypted unique system identifier 622. In these and other embodiments, if the decrypted unique system identifier 622 is validated, then a first set of operations may be performed to remove entitlement 330 between the original encrypted unique system identifier and digital assets 332. A second set of operations may then be performed to associate new encrypted unique system identifier 628 with digital assets 332 to generate new entitlement 630. Accordingly, the integrity of the original entitlement between the original encrypted unique system identifier and digital assets 332 may be perpetuated by new entitlement 630 between new encrypted unique system identifier 628 and digital assets 332.

In various other embodiments, the provider of the replacement system component may be able to determine its associated unique system component identifier. In some embodiments, the unique system component identifier may be known in advance. In other embodiments, the unique system component identifier may be one of a pool of, or a range of, possible unique system component identifiers set aside for replacement purposes. As described in greater detail herein, a new source unique identifier may be generated, using the unique system component identifier of the component to be replaced. Once the new source unique identifier is generated, the unique system component identifier of the replaced system component may be invalidated. In these and other embodiments, the system component may be replaced in the target system, the target system may then be initiated (e.g., booted), and an inventory of unique system component identifiers may be performed. In some embodiments, one or more unique system component identifiers, for example a serial number or service tag, may be visible and may be visually inventoried. In other embodiments, one or more unique system component identifiers, for example a motherboard, processor, or hard drive serial number, may not be visible and may be automatically inventoried.

As shown in FIGURE 6, a new source unique system identifier 650 may be generated from the inventoried unique system component identifiers. In some embodiments, a time stamp date and a time stamp time may be components of new source unique system identifier 650. In these embodiments, the time stamp date and a time stamp time may be used to validate the authenticity of new source unique system identifier 650. An encryption operation 652 may then be performed on new source unique system identifier 650 to generate new encrypted unique system identifier 628. As an example, the encryption operation may be performed using a private key associated with the target system and a public key associated with the provider of the replacement system component. The new encrypted unique system identifier 628 may then be communicated to a digital assets entitlement system, which in turn may perform a decryption operation 626 to generate a decrypted unique system identifier 622.

Comparison operations 654 may then be performed between the new source unique system identifier and decrypted unique system identifier 622. If comparison operations 654 are successful, then a first set of operations may be performed to remove the entitlement 330 between the original encrypted unique system identifier and digital assets 332. A second set of operations may then be performed to associate new encrypted unique system identifier 628 with digital assets 332 to generate a new entitlement 630. Accordingly, the integrity of the original entitlement between the original encrypted unique system identifier and digital assets 332 may be perpetuated by the new entitlement 630 between the new encrypted unique system identifier 628 and the digital assets 332. Skilled practitioners of the art may appreciate that many such embodiments are possible and the foregoing is not intended to limit the scope, or intent of the disclosure.

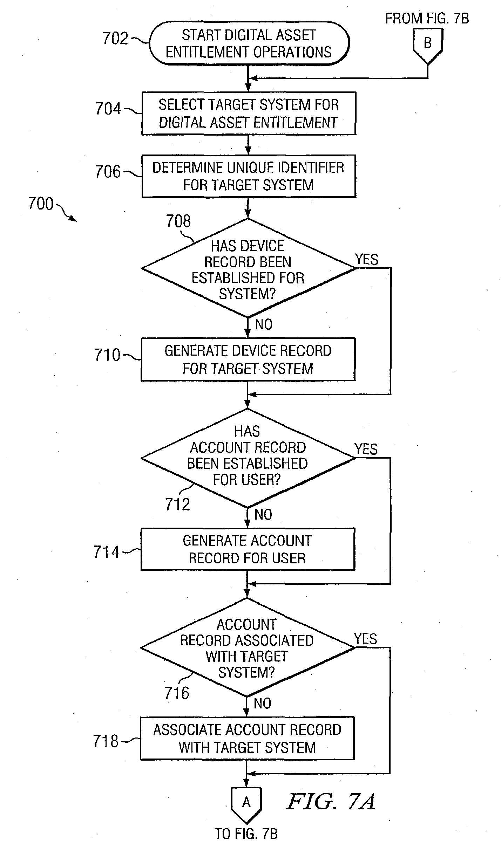

FIGURES 7A-B illustrate a flow chart of an example method 700 for performance of digital asset entitlement operations, in accordance with embodiments of the present disclosure. According to certain embodiments, method 700 may begin at step 702. As noted above, teachings of the present disclosure may be implemented in a variety of configurations of system 200. As such, the preferred initialization point for method 700 and the order of the steps 702-734 comprising method 700 may depend on the implementation chosen.

In method 700, digital asset entitlement operations may be started in step 702, followed by the selection of a target system in step 704 for digital assets entitlement. The unique system identifier of the target system, as described in greater detail herein, may be determined in step 706, followed by a determination being made in step 708 whether a device record has been established for the target system. If not, then the device record may be generated in step 710. As used herein, a device record may refer to a data record comprising data related to a system which will receive an entitlement to process associated digital assets. In various embodiments, the unique system identifier of the target system may be stored in the device record. In various embodiments, other records may be associated with the device record to further describe the system, such as, for example, its model, type, make, internal identifiers, etc.

Once the device record has been generated, or if it is determined in step 708 that it has already been established, then a determination may be made in step 712 whether an account record has been established for a user. If not, then the account record may be generated for the user in step 714. As used herein, an account record may refer to a data record comprising data related to the association of multiple devices or systems to one or more entities. In various embodiments, the entity may be a single individual or a group of individuals. As an example, the entity may be a household with multiple PCs, a small business with several employees, a large corporation with many employees, etc. Other records may be attached to the account to further describe the account holder, payment information related to the account, etc. Accounts may further be broken down or organized into sub-accounts as needed (e.g., to describe departments within an enterprise). In various embodiments, a user may be associated with a single device or system or multiple devices or systems in the account record. Conversely, a group of users may be associated with a single device or system or multiple devices in the account record. Further, more groups of individual users may likewise be associated with groups of individual devices or systems. Those of skill in the art may appreciate that many such associations are possible and the foregoing is not intended to limit the scope, or intent of the disclosure. Once the account record has been generated, or if it is determined in step 712 that it has already been established, then a determination may be made in step 716 whether the account record may be associated with the target system. If not, then the account record may be associated with the target system in step 718.

Once the account record has been associated with the target system, or if it is determined in step 716 that it has already been associated, then a target list of digital assets may be presented in step 720 for entitlement. A determination may then be made in step 722 whether to generate an entitlement for a digital asset. If not, then a determination may be made in step 732 whether to continue digital asset entitlement operations. If so, then the process may be continued, proceeding with step 704. Otherwise digital asset entitlement operations may be ended in step 734. However, if it is determined in step 722 to generate an entitlement for a digital asset, then a target digital asset may be selected in step 724. A digital assets entitlement may then be generated in step 726 by performing operations to associate the selected digital asset's corresponding license record with the aforementioned device record, account record, and/or other predetermined records. The resulting digital assets entitlement association may then be added to the entitlement record in step 728. A determination may then be made in step 730 whether to generate another digital assets entitlement. If so, the process may be continued, proceeding with step 724. Otherwise, a determination may be made in step 732 whether to continue digital asset entitlement operations. If so, then the process may be continued, proceeding with step 704. Otherwise digital asset entitlement operations may be ended in step 734.

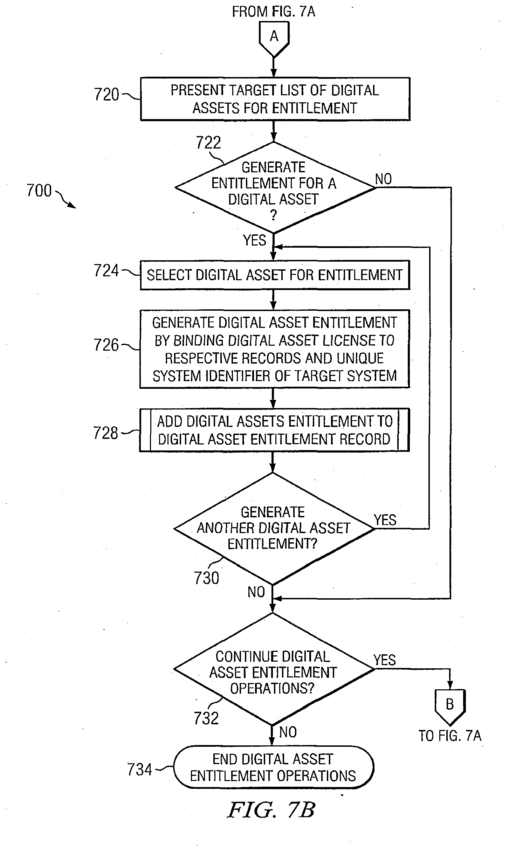

Although FIGURES 7A and 7B disclose a particular number of steps to be taken with respect to method 700, method 700 may be executed with greater or lesser steps than those depicted in FIGURES 7A and 7B. In addition, although FIGURES 7A and 7B disclose a certain order of steps to be taken with respect to method 700, the steps comprising method 700 may be completed in any suitable order.

Method 700 may be implemented using information handling system 100, system 200, components thereof, and/or any other system operable to implement method 700. In certain embodiments, method 700 may be implemented partially or fully in software and/or firmware embodied in computer-readable media.

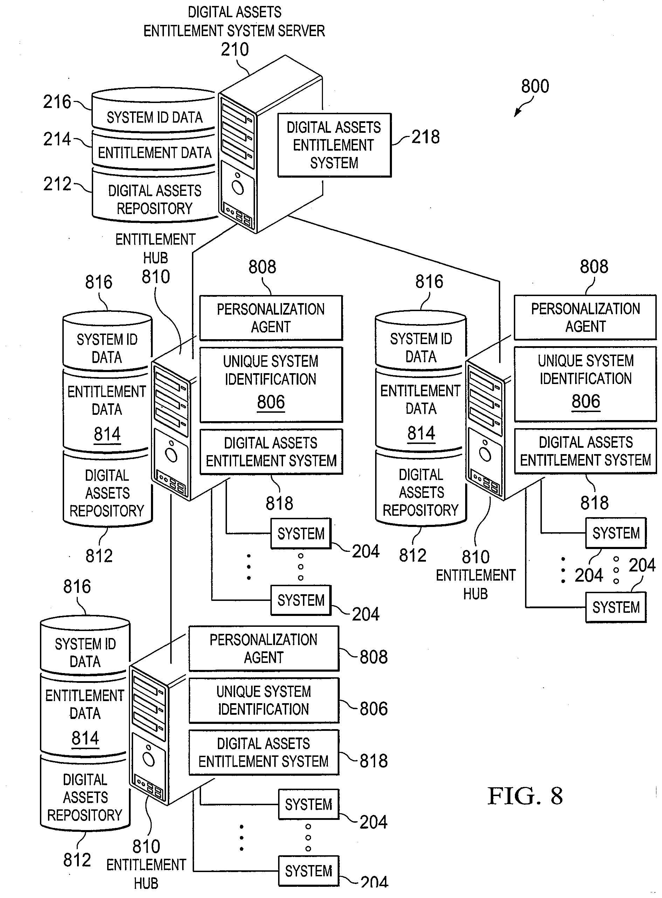

FIGURE 8 illustrates a block diagram of an example hierarchical system 800 for management of digital assets entitlement, in accordance with embodiments of the present disclosure. As shown in FIGURE 8, system 800 may include a digital assets entitlement system server 210, such as that described with respect to FIGURE 2 above. Digital assets entitlement system server 210 may be communicatively coupled to one or more entitlement hubs 810 (e.g., via a network, such as network 252). As depicted in FIGURE 8, each entitlement hub 810 may comprise a digital assets repository 812, entitlement data 814, system ID data 816, digital assets entitlement system 818, unique system ID 806, and a personalization agent 808. Digital assets repository 812, entitlement data 814, system ID data 816, and/or digital assets entitlement system 818 may be similar or identical in structure and/or functionality to digital assets repository 212, entitlement data 214, system ID data 216, and digital assets entitlement system 218, respectively. In addition, unique system ID 806 and/or personalization agent 808 may be similar or identical in structure and/or functionality to unique system ID 206 and/or personalization agent 208, respectively, of a system 204.

As depicted in FIGURE 8, an entitlement hub 810 may be communicatively coupled (e.g., via a network such as network 252) to digital assets entitlement system server 210 or another "upstream" entitlement hub 810. In addition, an entitlement hub 810 may be communicatively coupled (e.g., via a network such as network 252) to one or more target systems 204 and/or one or more "downstream" entitlement hubs 810. Thus, a hierarchical entitlement management system may result, in which an entitlement hub 810 may be managed by a parent digital assets entitlement system server 210 or parent entitlement hub 810, while at the same time managing one or more child entitlement hubs 810 and/or one or more child target systems 204. Accordingly, an entitlement hub 810 may operate as a sort of hybrid device, in which it behaves identically or similarly to a target system 204 with respect to a parent digital assets entitlement system server 210 or parent entitlement hub 810 but behaves identically or similarly to a digital assets entitlement system server 210 with respect to its child entitlement hubs 810 and/or child target systems 204.

In operation, digital assets entitlement operations, such as those described in this disclosure, may be carried out between digital assets entitlement system server 210 and an entitlement hub 810 in order to generate entitlements for and bind digital assets to the entitlement hub 810. Such generated entitlements may comprise a plurality of entitlements or "bulk" entitlements related to a particular digital asset. Similarly, digital assets entitlement operations, such as those described in this disclosure, may be carried out between an entitlement hub 810 and its child entitlement hubs 810 and/or target systems 204 in order to generate entitlements for and bind digital assets to the entitlement hub 810. When generating entitlements for a child entitlement hub 810, such generated entitlements may comprise a plurality of entitlements or "bulk" entitlements related to a particular digital asset. The number of entitlements for a particular digital asset generated between an entitlement hub 810 and its child devices (e.g., other entitlements hubs 810 and target systems 204) may be limited to the number of entitlements generated for such entitlement hub by its parent device (e.g., digital assets entitlement system server 210 or another entitlement hub 810). Accordingly, digital assets entitlement server 210 may allocate available entitlements for a digital asset among a plurality of child entitlement hubs 810, which may in turn distribute such entitlements to their respective child entitlement hubs 810 and target systems 204, thus creating a distributed and hierarchical entitlements management system.

For example, in a large geographically-dispersed enterprise, entitlements for a digital asset may be allocated among various geographical regions. Accordingly, a digital assets entitlement system server 210 operating at the enterprise level may allocate available entitlements among various geographical regions of the enterprise (e.g., x number of entitlements to an East Coast office and y number of entitlements to a West Coast office). For each geographical region, a respective entitlement hub 810 may be responsible for generating entitlements and creating bindings for target systems 204 within the geographical region, and/or may be responsible for allocating entitlements among further subdivisions of the enterprise and respective entitlement hubs 810 associated with such subdivisions.

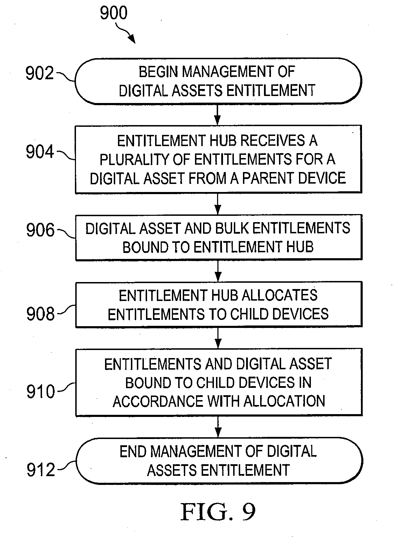

FIGURE 9 illustrates a flow chart of an example method 900 for performance of digital assets entitlement management in a hierarchical system for management of digital assets entitlement, in accordance with embodiments of the present disclosure. According to certain embodiments, method 900 may begin at step 902. As noted above, teachings of the present disclosure may be implemented in a variety of configurations of systems 200 and 800. As such, the preferred initialization point for method 900 and the order of the steps 902-912 comprising method 900 may depend on the implementation chosen.

In method 900, management of digital assets entitlement may begin in step 902. At step 904, an entitlement hub may receive bulk entitlements for a digital asset from a parent device (e.g., a digital assets entitlement system server or another entitlement hub). At step 906, the entitlement hub and/or the parent device may bind the digital asset and the bulk entitlements to the entitlement hub by carrying out digital asset entitlement operations, as described in greater detail elsewhere in this disclosure.

At step 908, the entitlement hub may allocate the plurality of entitlements among one or more child devices (e.g., target systems or other entitlement hubs). At step 910, the entitlement hub and/or the child devices may carry out digital asset entitlement operations, as described in greater detail elsewhere in this disclosure, in order to bind the entitlements and digital asset to the respective child devices in accordance with the allocation.

At step 912, management of digital assets entitlement may end.

Although FIGURE 9 discloses a particular number of steps to be taken with respect to method 900, method 900 may be executed with greater or lesser steps than those depicted in FIGURE 9. In addition, although FIGURE 9 discloses a certain order of steps to be taken with respect to method 900, the steps comprising method 900 may be completed in any suitable order.

Method 900 may be implemented using information handling system 100, system 200, system 800, components thereof, and/or any other system operable to implement method 900. In certain embodiments, method 900 may be implemented partially or fully in software and/or firmware embodied in computer-readable media.

The present disclosure is well adapted to attain the advantages mentioned as well as others inherent therein. While the present disclosure has been depicted, described, and is defined by reference to particular embodiments of the disclosure, such references do not imply a limitation on the disclosure, and no such limitation is to be inferred. The disclosure is capable of considerable modification, alteration, and equivalents in form and function, as will occur to those ordinarily skilled in the pertinent arts. The depicted and described embodiments are examples only, and are not exhaustive of the scope of the disclosure.

For example, the above-discussed embodiments include software modules that perform certain tasks. The software modules discussed herein may include script, batch, or other executable files. The software modules may be stored on a machine-readable or computer-readable storage medium such as, for example, a disk drive. Storage devices used for storing software modules in accordance with embodiments of the disclosure may be magnetic floppy disks, hard disks, or optical discs such as CD-ROMs or CD-Rs, for example. A storage device used for storing firmware or hardware modules in accordance with embodiments of the disclosure may also include a semiconductor-based memory, which may be permanently, removably or remotely coupled to a microprocessor/memory system. Thus, the modules may be stored within a computer system memory to configure the computer system to perform the functions of the module. Other new and various types of computer-readable storage media may be used to store the modules discussed herein. Additionally, those skilled in the art will recognize that the separation of functionality into modules is for illustrative purposes. Alternative embodiments may merge the functionality of multiple modules into a single module or may impose an alternate decomposition of functionality of modules. For example, a software module for calling sub-modules may be decomposed so that each sub-module performs its function and passes control directly to another sub-module.

Accordingly, although the present disclosure has been described in detail, it should be understood that various changes, substitutions, and alterations can be made hereto without departing from the scope of the disclosure as defined by the appended claims.

## Claims

1. A distributed and hierarchical information handling system (800) for managing the entitlement of digital assets (246), comprising:
a digital assets entitlement server (210);
a parent entitlement hub (810) connected to the digital assets entitlement server (210);
a child entitlement hub (810) connected to the parent entitlement hub (810);
wherein the parent entitlement hub (810) is configured for managing entitlements for a first portion of a plurality of target systems (204) and for allocating available entitlements for a digital asset to the child entitlement hub (810);
wherein the child entitlement hub (810) is configured for managing entitlements for a second portion of the plurality of target systems (204);
wherein the parent entitlement hub (810) is further configured for binding digital assets to itself and to the child entitlement hub (810) and for receiving a plurality of entitlements for a digital asset (246) from the digital assets entitlement server (210); and
wherein the child entitlement hub (810) is further configured for binding digital assets to itself and for receiving a plurality of entitlements for a digital asset (246) from the parent entitlement hub (810);
wherein the digital assets entitlement server is configured for:
generating a unique system identifier from a plurality of unique system component identifiers which correspond to a plurality of system components included in one of the target systems of the plurality of target systems;
binding the generated unique system identifier with predetermined digital assets (246) to generate a digital assets entitlement entitling the one target system of the plurality of target systems (204) to process the digital asset;
wherein the unique system identifier remains the same when one of its associated system component identifiers has been changed due to one of the system components being replaced in the one target system of the plurality of target systems; and
performing database operations for managing the integrity of the relationship between the unique system identifier and the plurality of unique system component identifiers.

2. The information handling system (800) of Claim 1, wherein the plurality of target systems are intended for use by an end user.

3. A computer-implemented method for managing the entitlement of digital assets (246), comprising the steps of:
managing, by a parent entitlement hub (810) connected to a digital assets entitlement server (210), entitlements for a first portion of a plurality of target systems (204);
allocating, by the parent entitlement hub (810), available entitlements for a digital asset to a child entitlement hub (810) connected to the parent entitlement hub (810);
managing, by the child entitlement hub (810), entitlements for a second portion of the plurality of target systems (204);
binding, by the parent entitlement hub (810), digital assets to itself and to the child entitlement hub (810); and
binding, by the child entitlement hub (810), digital assets to itself;
receiving, by the child entitlement hub (810), a plurality of entitlements for a digital asset (246) from the parent entitlement hub (810);
receiving, by the parent entitlement hub (810), a plurality of entitlements for a digital asset (246) from the digital assets entitlement server (210);
generating, by the digital assets entitlement server (210), a unique system identifier from a plurality of unique system component identifiers which correspond to a plurality of system components included in one of the target systems of the plurality of target systems (204);
binding, by the digital assets entitlement server (210), the generated unique system identifier with predetermined digital assets (246) to generate a digital assets entitlement entitling the one target system of the plurality of target systems (204) to process the digital asset;
wherein the unique system identifier remains the same when one of its associated system component identifiers has been changed due to one of the system components being replaced in the one target system of the plurality of target systems; and
performing, by the digital assets entitlement server (210), database operations for managing the integrity of the relationship between the unique system identifier and the plurality of unique system component identifiers.

4. The method of Claim 3, wherein the plurality of target systems is intended for use by an end user.

5. A computer program comprising instructions which cause a computer to perform a method according to any of the preceding claims 3-4 when executed on the computer.

## Patentansprüche

1. Verteiltes und hierarchisches Informationsverarbeitungssystem (800) zur Verwaltung der Berechtigung für digitale Ressourcen (246), umfassend:
einen Server (210) für Berechtigungen für digitale Ressourcen;
einen übergeordneten Berechtigungs-Hub (810), der mit dem Server (210) für Berechtigungen für digitale Ressourcen verbunden ist;
einen untergeordneten Berechtigungs-Hub (810), der mit dem übergeordneten Berechtigungs-Hub (810) verbunden ist;
wobei der übergeordnete Berechtigungs-Hub (810) zum Verwalten der Berechtigungen für einen ersten Teil einer Vielzahl von Zielsystemen (204) und zum Zuweisen von verfügbaren Berechtigungen für eine digitale Ressource an den untergeordneten Berechtigungs-Hub (810) konfiguriert ist;
wobei der untergeordnete Berechtigungs-Hub (810) zum Verwalten von Berechtigungen für einen zweiten Teil der Vielzahl von Zielsystemen (204) konfiguriert ist;
wobei der übergeordnete Berechtigungs-Hub (810) ferner zum Binden digitaler Ressourcen an sich selbst und an den untergeordneten Berechtigungs-Hub (810) und zum Empfangen einer Vielzahl von Berechtigungen für eine digitale Ressource (246) von dem Server (210) für Berechtigungen für digitale Ressourcen konfiguriert ist; und
wobei der untergeordnete Berechtigungs-Hub (810) ferner zum Binden digitaler Ressourcen an sich selbst und zum Empfangen einer Vielzahl von Berechtigungen für eine digitale Ressource (246) von dem übergeordneten Berechtigungs-Hub (810) konfiguriert ist;
wobei der Server für Berechtigungen für digitale Ressourcen zu Folgendem konfiguriert ist:
Generieren einer eindeutigen Systemkennung aus einer Vielzahl von eindeutigen Systemkomponentenkennungen, die einer Vielzahl von Systemkomponenten entspricht, die in einem der Zielsysteme der Vielzahl von Zielsystemen beinhaltet ist;
Binden der generierten eindeutigen Systemkennung mit vorbestimmten digitalen Ressourcen (246), um eine Berechtigung für digitale Ressourcen zu generieren, die das eine Zielsystem der Vielzahl von Zielsystemen (204) berechtigt, die digitale Ressource zu verarbeiten;
wobei die eindeutige Systemkennung dieselbe bleibt, wenn eine ihrer zugeordneten Systemkomponentenkennungen geändert wurde, weil eine der Systemkomponenten in dem einen Zielsystem der Vielzahl von Zielsystemen ersetzt wurde; und
Durchführen von Datenbankoperationen zum Verwalten der Integrität der Beziehung zwischen der eindeutigen Systemkennung und der Vielzahl von eindeutigen Systemkomponentenkennungen.

2. Informationsverarbeitungssystem (800) nach Anspruch 1, wobei die Vielzahl von Zielsystemen für eine Verwendung durch einen Endbenutzer vorgesehen ist.

3. Computerimplementiertes Verfahren zur Verwaltung der Berechtigung für digitale Ressourcen (246), umfassend die folgenden Schritte:
Verwalten von Berechtigungen für einen ersten Teil einer Vielzahl von Zielsystemen (204) durch einen mit einem Server (210) für Berechtigungen für digitale Ressourcen verbundenen übergeordneten Berechtigungs-Hub (810);
Zuweisen von verfügbaren Berechtigungen für eine digitale Ressource durch den übergeordneten Berechtigungs-Hub (810) an einen untergeordneten Berechtigungs-Hub (810), der mit dem übergeordneten Berechtigungs-Hub (810) verbunden ist;
Verwalten von Berechtigungen für einen zweiten Teil der Vielzahl von Zielsystemen (204) durch den untergeordneten Berechtigungs-Hub (810);
Binden von digitalen Ressourcen an sich selbst und an den untergeordneten Berechtigungs-Hub (810) durch den übergeordneten Berechtigungs-Hub (810); und
Binden von digitalen Ressourcen an sich selbst durch den untergeordneten Berechtigungs-Hub (810); Empfangen einer Vielzahl von Berechtigungen für eine digitale Ressource (246) durch den untergeordneten Berechtigungs-Hub (810) von dem übergeordneten Berechtigungs-Hub (810);
Empfangen einer Vielzahl von Berechtigungen für eine digitale Ressource (246) durch den übergeordneten Berechtigungs-Hub (810) von dem Server (210) für Berechtigungen für digitale Ressourcen; Generieren einer eindeutigen Systemkennung aus einer Vielzahl von eindeutigen Systemkomponentenkennungen, die einer Vielzahl von Systemkomponenten entspricht, die in einem der Zielsysteme der Vielzahl von Zielsystemen (204) beinhaltet ist, durch den Server (210) für Berechtigungen für digitale Ressourcen;
Binden der generierten eindeutigen Systemkennung mit vorbestimmten digitalen Ressourcen (246) durch den Server (210) für Berechtigungen für digitale Ressourcen, um eine Berechtigung für digitale Ressourcen zu generieren, die das eine Zielsystem der Vielzahl von Zielsystemen (204) berechtigt, die digitale Ressource zu verarbeiten;
wobei die eindeutige Systemkennung dieselbe bleibt, wenn eine ihrer zugeordneten Systemkomponentenkennungen geändert wurde, weil eine der Systemkomponenten in dem einen Zielsystem der Vielzahl von Zielsystemen ersetzt wurde; und
Durchführen von Datenbankoperationen durch den Server (210) für Berechtigungen für digitale Ressourcen zum Verwalten der Integrität der Beziehung zwischen der eindeutigen Systemkennung und der Vielzahl von eindeutigen Systemkomponentenkennungen.

4. Verfahren nach Anspruch 3, wobei die Vielzahl von Zielsystemen für eine Verwendung durch einen Endbenutzer vorgesehen ist.

5. Computerprogramm, das Anweisungen umfasst, die einen Computer bei Ausführung auf dem Computer dazu veranlassen, ein Verfahren nach einem der vorhergehenden Ansprüche 3-4 durchzuführen.

## Revendications

1. Un système de traitement d'informations distribué et hiérarchique (800) pour gérer le droit d'actifs numériques (246), comprenant :
serveur de droits d'actifs numériques (210) ;
un concentrateur de droits parent (810) connecté au serveur de droits d'actifs numériques (210) ;
un concentrateur de droits enfant (810) connecté au concentrateur de droits parent (810) ;
dans lequel le concentrateur de droits parent (810) est configuré pour gérer les droits pour une première partie d'une pluralité de systèmes cibles (204) et pour attribuer les droits disponibles pour un actif numérique au concentrateur de droits enfant (810) ;
dans lequel le concentrateur de droits enfant (810) est configuré pour gérer les droits pour une seconde partie de la pluralité de systèmes cibles (204) ;
dans lequel le concentrateur de droits parent (810) est également configuré pour lier des actifs numériques à lui-même et au concentrateur de droits enfant (810) et pour recevoir une pluralité de droits pour un actif numérique (246) à partir du serveur de droits d'actifs numériques (210) ; et
dans lequel le concentrateur de droits enfant (810) est également configuré pour lier des actifs numériques à lui-même et pour recevoir une pluralité de droits pour un actif numérique (246) du concentrateur de droits parent (810) ;
dans lequel le serveur de droits d'actifs numériques est configuré pour :
générer un identifiant de système unique à partir d'une pluralité d'identifiants de composants de système uniques qui correspondent à une pluralité de composants de système compris dans l'un des systèmes cibles de la pluralité de systèmes cibles ;
lier l'identifiant système unique généré à des actifs numériques prédéterminés (246) pour générer un droit d'actifs numériques autorisant le système cible de la pluralité de systèmes cibles (204) à traiter l'actif numérique ;
dans lequel l'identifiant de système unique reste le même lorsque l'un de ses identifiants de composant de système associés a été modifié en raison du remplacement de l'un des composants de système dans le système cible de la pluralité de systèmes cibles ; et
effectuer des opérations de base de données pour gérer l'intégrité de la relation entre l'identifiant système unique et la pluralité d'identifiants de composants système uniques.

2. Système de traitement d'informations (800) selon la Revendication 1, dans lequel la pluralité de systèmes cibles sont destinés à l'utilisation par un utilisateur final.

3. Procédé mis en œuvre par ordinateur pour gérer les droits sur des actifs numériques (246), comprenant les étapes consistant à :
gérer, par un concentrateur de droits parent (810) connecté à un serveur de droits d'actifs numériques (210), des droits pour une première partie d'une pluralité de systèmes cibles (204) ;
attribuer, par le concentrateur de droits parent (810), des droits disponibles pour un actif numérique à un concentrateur de droits enfant (810) connecté au concentrateur de droits parent (810) ;
gérer, par le concentrateur de droits enfant (810), des droits pour une seconde partie de la pluralité de systèmes cibles (204) ;
lier, par le concentrateur de droits parent (810), des actifs numériques à lui-même et au concentrateur de droits enfant (810) ; et
lier, par le concentrateur de droits enfant (810), des actifs numériques à lui-même ;
recevoir, par le concentrateur de droits enfant (810), une pluralité de droits pour un actif numérique (246) en provenance du concentrateur de droits parent (810) ;
recevoir, par le concentrateur de droits parent (810), une pluralité de droits pour un actif numérique (246) en provenance du serveur de droits d'actifs numériques (210) ;
générer, par le serveur de droits d'identités numériques (210), un identifiant de système unique à partir d'une pluralité d'identifiants de composants de système uniques qui correspondent à une pluralité de composants de système compris dans l'un des systèmes cibles de la pluralité de systèmes cibles (204);
lier, par le serveur de droits d'identités numériques (210), l'identifiant système unique généré à des actifs numériques prédéterminés (246) pour générer un droit d'accès aux actifs numériques autorisant le système cible de la pluralité de systèmes cibles (204) à traiter l'actif numérique ;
dans lequel l'identifiant de système unique reste le même lorsque l'un de ses identifiants de composant de système associés a été modifié en raison du remplacement de l'un des composants de système dans le système cible de la pluralité de systèmes cibles ; et
effectuer, par le serveur de droits d'identités numériques (210), des opérations de base de données pour gérer l'intégrité de la relation entre l'identifiant système unique et la pluralité d'identifiants de composants système uniques.

4. Procédé selon la revendication 3, dans lequel la pluralité de systèmes cibles est destinée à l'utilisation par un utilisateur final.

5. Programme informatique comprenant des instructions qui amènent un ordinateur à exécuter un procédé selon l'une quelconque des revendications 3 à 4 précédentes lorsqu'elles sont exécutées sur l'ordinateur.
